# EUROPÄISCHE PATENTSCHRIFT

(11) **EP 2 246 681 B1**
(45) Veröffentlichungstag und Bekanntmachung des Hinweises auf die Patenterteilung: **25.07.2018**
(21) Anmeldenummer: 10002456.1
(22) Anmeldetag: 09.03.2010
(51) Int. Cl.: G01L 1/24, G01L 5/16, G01L 5/20, G01M 17/10

(54) **Vorrichtung zur Messung der zwischen Rad und Schiene auftretenden Kräfte, insbesondere Messradsatz für Schienenfahrzeuge**
Device for measuring forces generated between a wheel and a rail, in particular measuring wheel assembly for rail vehicles
Dispositif de mesure des forces entre une roue et un rail, notamment ensemble de roue de mesure pour véhicules sur rails

(30) Priorität: 28.04.2009 DE 102009018927
(43) Veröffentlichungstag der Anmeldung: 03.11.2010
(73) Patentinhaber: Deutsche Bahn AG, 10785 Berlin (DE)
(72) Erfinder: Brodtka, Andreas, 31675 Bückeburg (DE); Schwabe, Olaf, 32457 Porta Westfalica (DE); Göber, Steffen, 32427 Minden (DE)

(56) Entgegenhaltungen:
- EP-A2- 1 780 524
- US-A1- 2005 253 051

## Beschreibung

### Schienenfahrzeugs und Schiene auftretenden Kräfte

Die Erfindung betrifft einen Messradsatz für Schienenfahrzeuge zur Messung der zwischen Rad eines Schienenfahrzeugs und Schiene auftretenden Kräfte, umfassend einen Radsatz mit zwei Radscheiben und einer Welle, wobei auf mindestens einer Seite einer jeden Radscheibe des Radsatzes und zusätzlich erforderlichenfalls auf der Welle optische Dehnungsmessstreifen angeordnet sind, die mit eine Datenerfassungs- und -verarbeitungseinheit koppelbar sind.

Aus kommerziellen Gründen nehmen Geschwindigkeiten und Achslasten im Schienenverkehr zu. Dabei ist es aus verschiedenen Gründen unbedingt notwendig, die daraus entstehenden Auswirkungen sowohl auf das Fahrzeug als auch auf den Oberbau zu kennen. Von maßgeblicher Bedeutung sind die zwischen Rad und Schiene auftretenden Kräfte.

Zur kontinuierlichen Bestimmung der Radaufstandskräfte, der Führungskräfte und der Tangentialkräfte wurde das sogenannte Radsatzwellenverfahren entwickelt (Glasers Annalen Nr. 12/1972). Bei diesem Verfahren werden an Messquerschnitten mittels je acht Messfühlern (Dehnungsmessstreifen) die Biegedehnungen und Biegespannungen einer Radsatzwelle gemessen. Da diese Biegedehnungen und Biegespannungen zu den auftretenden Kräften in Beziehung stehen, können aufgrund der Messwerte auch die Kräfte bestimmt werden. Nachteilig ist bei diesem Verfahren, dass infolge des sich ändernden Radaufstandspunktes die gemessene Führungskraft mit einem relativ großen Messfehler behaftet ist.

Zur Ermittlung der vertikalen Kräfte zwischen Rad und Schiene im Radaufstandspunkt wurde ein Messrad entwickelt (DE-PS 2647505). Bei diesem Messrad sind im Radkranz in Umfangsrichtung nebeneinander mehrere quer zur Radebene sich erstreckende Ausnehmungen vorgesehen. In diesen Ausnehmungen sind die Messfühler verteilt über die Breite des Radkranzes angeordnet. Nicht möglich ist es, mit diesem Messrad die horizontalen Kräfte zwischen Rad und Schiene zu bestimmen.

Die Messung horizontaler Kräfte zwischen Rad und Schiene unabhängig vom Radaufstandspunkt ist möglich mit einem Messradsatz nach OS-DE 3114499 A1 bei dem auf der Welle an drei Messquerschnitten je acht Messfühler angeordnet sind, wobei vier Messfühler in Achsrichtung und vier Messfühler quer zur Achsrichtung liegen. Nachteilig ist hierbei jedoch, dass Temperatureinflüsse die Messergebnisse stark beeinflussen können.

Aus DE 42 18 929 C1, WO 00/20831 und DE 31 14 499 A1 sind Messradsätze zur Ermittlung der zwischen Rad und Schiene auftretenden Kräfte bekannt, bei denen je Radius acht Messfühler angeordnet sind, wobei beispielsweise vier Messfühler auf der Radscheibeninnenseite und vier Messfühler auf der Radscheibenaußenseite liegen. Hierbei sind mindestens zwei Messradien pro Radscheibe vorhanden. Zur Messwertbestimmung sind acht Messfühler (R1 bis R8) eines Messradius zu zwei Wheatstoneschen Messbrücken zusammengeschaltet, wobei zwei Messfühler auf der Radscheibeninnenseite und zwei Messfühler auf der Radscheibenaußenseite zusammengehören. Als Messfühler werden insbesondere Dehnungsmessstreifen (DMS) verwendet, die auf die Radscheibe aufgeklebt werden.

Hierdurch werden die horizontalen Kräfte zwischen Rad und Schiene ohne Einfluss des Radaufstandspunktes gemessen, so dass eindeutige Angaben zur Entgleisungssicherheit und zur Gleisbeanspruchung möglich sind.

Alle aktuell auf dem Gebiet der Eisenbahnmesstechnik eingesetzten Messradsätze zur Messung der im Berührpunkt Rad-Schiene wirkenden Kräfte basieren auf der Verwendung von elektrischen Dehnungsmessstreifen (DMS). Diese sind zwar mittlerweile in Bezug auf Herstellung und Anwendung ausgereift, bringen jedoch auch einige nicht vernachlässigbare Nachteile mit. So ist wie bei allen elektrischen Messmitteln die Beeinflussung des Messsignals durch elektromagnetische Felder gegeben und kann meistens nicht vollständig eliminiert werden. Darüber hinaus sind DMS Strom durchflossene Leiter, die meistens zu Wheatstone'schen Vollbrücken verschaltet werden. Der dazu erforderliche Verkabelungsaufwand bindet nicht nur wertvolle personelle Kapazitäten und verursacht somit hohe Fertigungskosten und -dauern, sondern birgt darüber hinaus auch Gefahren für die Zuverlässigkeit der Messmittel, denn großflächige Verkabelungen erhöhen die Wahrscheinlichkeit von Beschädigungen oder - dem vorbeugend - den Aufwand zum Schutz der Messstellen.

Zur Übertragung der durch die DMS generierten Signale sind vielkanalige, kostspielige Übertragungsgeräte, sogenannte Telemetrien erforderlich. Hier sind zunächst die Schleifringe zu nennen, deren Hauptnachteil die Verschleiß behaftete Übertragung analoger Signale darstellt, was zu bedingt zuverlässigen Übertragungswegen und erhöhten Instandhaltungskosten führt. Weiterhin wurden Telemetriesysteme entwickelt und eingesetzt, die bereits auf dem rotierenden Radsatz die Signalkonitionierung bis hin zur Digitalisierung der Signale vornehmen und dank eines optischen Transfers der Informationen den Hauptnachteil der Schleifringe beseitigten. Dennoch unterliegen diese teuren Elektroniken einer enormen Schockbbeanspruchung, die im höherfrequenten Bereich bis zu einigen 1000 m/s² betragen kann und nicht selten zur Reparaturbedürftigkeit dieser Übertrager führt. Zudem unterliegt der in der Radsatzwelle untergebrachte Teil der Telemetrien den im Bereich des Radsatzlagers vorherrschenden Temperaturbedingungen, die ebenfalls zumindest einen temporären Ausfall bewirken können. Dem konnte vorgebeugt werden, indem eine Modifikation dieser Art von Übertragern ausschließlich außerhalb der Radsatzwelle montiert wurde, was unbeeinflusst von der Lagertemperatur zu einer höheren Verfügbarkeit führte.

Alle bisher genannten Signalübertrager haben einen Nachteil gemeinsam: Die auf dem Radsatz generierten Signale müssen Kabel gebunden über Bohrungen in der Radsatzwelle zum rotierenden Teil des Übertragers geführt werden. Diese Bohrungen führen dazu, dass die Radsatzwellen der Messradsätze im Sinne der Dauerfestigkeit zerstört werden und nur unter besonderen Sicherheitsauflagen betrieben werden können. Eine spätere Weiterverwendung der Radsatzwellen im operativen Einsatz von Eisenbahnfahrzeugen ist aus Sicherheitsaspekten nicht möglich.

Zur Eliminierung dieses wesentlichen wirtschaftlichen Nachteiles wurden kabellosen Übertragungsmöglichkeiten entwickelt, die die auf dem Radsatz generierten Signale über Funk oder induktiv vom rotierenden auf das statische System übertragen. Somit kann auf die schädigenden Bohrungen verzichtet werden, jedoch muss nach wie vor elektrische Energie auf das auf dem Radsatz applizierte Messsystem übertragen werden. Nachteilig im Fall der induktiven Übertragung sind hierbei die engen Toleranzgrenzen des Abstandes zwischen rotor- und statorseitgen Antennen zu nennen, im Falle der Funkübertragung sind es die radsatzseitigen Akkus bzw. Batterien, die einen häufigen Zugriff auf das System zum Zwecke des Tauschs oder der Aufladung erfordern.

Bekannt sind optische Dehnmessstreifen verschiedener Ausführungen aus der DE 102 49 896 A1, EP 1 129 327 B1 und der DE 100 04 384 C2.

Die DE 10 2005 030 751 A1 beschreibt einen optischen Dehnmessstreifen, der aus einer ebenen Trägerschicht vorzugsweise aus Kunststoff und einer Deckschicht besteht, zwischen denen mindestens ein Lichtwellenleiter kraftschlüssig angeordnet ist. Der Lichtwellenleiter besitzt mindestens einen Abschnitt mit einem Brigg-Gitter zur Erfassung der Dehnung eines Verformungskörpers oder eines anderen Bauteilbereiches. Der Lichtwellenleiter ist innerhalb mindestens eines vorgesehenen Führungskanals in die Trägerfolie als Trägerschicht eingelassen. Der Führungskanal mit dem Lichtwellenleiter und dem darin eingeprägten Bragg-Gitter ist mit einer Abdeckfolie als Abdeckschicht verschlossen, die aus dem gleichen Material wie die Trägerfolie besteht.

Aus der DE 10 2005 030 753 A1 ist ein optischer Dehnmessstreifen zur mehrachsigen Dehnungsmessung bekannt, der mindestens zwei geradlinige Lichtwellenleiterabschnitte mit Bragg-Gittern enthält. Zwischen dem einspeisenden Wellenleiterabschnitt und den die Bragg-Gitter enthaltenen messenden Wellenleiterabschnitten ist ein Strahlaufweitungselement angeordnet.

Die US 2005/0253051 beschreibt eine Vorrichtung zur Überwachung eines rotierenden Körpers, vorzugsweise der Rotorachse eines Hubschraubers, wobei ein Lichtwellenleiter mit mehreren darin enthaltenen Faser-Bragg-Gittern an einem rotierenden Körper zur Detektion der Deformation angeordnet ist. Die Vorrichtung ist für den Eisenbahnverkehr zur Messung zwischen Rad und Schiene ungeeignet, da ungeschützt verbaut. Die zwischen Rad und Schiene wirkenden Kräfte können mit dieser Vorrichtung nicht erfasst werden.

Die EP 1 780 524 A2 beschreibt einen Messradsatz für Schienenfahrzeuge, wobei auf der Radscheibe Messfühler in Form von Dehnmessstreifen zur Erfassung von im Fahrbetrieb auftretenden Kräften angeordnet sind. Lichtwellenleiter und optische Drehübertrager kommen hier nicht zum Einsatz.

Der Erfindung liegt deshalb die Aufgabe zugrunde, einen Messradsatz zu entwickeln, der ohne die genannten nachteiligen Eigenschaften einzelner Komponenten auskommt und dennoch wirtschaftlich zu fertigen ist.

Dies wird erfindungsgemäß dadurch erreicht, dass auf dem Radsatz mindestens ein Lichtwellenleiter mit den darin untergebrachten optischen Dehnungsmessstreifen angeordnet ist, wobei jeder Lichtwellenleiter von den Applikationsorten auf einer Radscheibe und gegebenenfalls auf der Welle des rotierenden Radsatzes über den Wellenbereich zwischen einem Radsitz und einem Radsatzlagersitz, durch eine Öffnung am Labyrinthring und anschließend durch eine axial auf der inneren Leibung eines Radsatzlagerinnenringes verlaufende Aussparung/Mulde geführt und mit einem zum Beispiel am Radsatzlagerdeckel eines Radsatzlagergehäuses angeordneten optischen Drehübertrager verbunden ist, der mit der Datenerfassungs- und - verarbeitungseinheit koppelbar ist, die die in dem Lichtwellenleiter enthaltenen Informationen kanalweise trennt und den entsprechenden Applikationsorten zuordnet, woraus die zwischen Rad und Schiene wirkenden Kräfte ermittelbar sind. Das zweite Ende des Lichtwellenleiters wird im Normalfall nicht benötigt, wird aber dennoch mit dem ersten Ende gemeinsam zum optischen Drehübertrager geführt, damit aber nicht verbunden. Im Falle einer Beschädigung des Lichtwellenleiters stehen dem Anwender zwei Möglichkeiten offen. Wenn sich sämtliche Dehnungsmessstreifen in ein und demselben Teil des Lichtwellenleiters befinden, ist dieses Ende an den optischen Drehübertrager anzuschließen. Befindet sich je eine Anzahl Dehnungsmessstreifen auf beiden Teilen des durchtrennten Lichtwellenleiters, muss dieser durch geeignete und bekannte Verfahren repariert werden. Hierfür ist der Lichtwellenleiter in der Fertigungsphase des Messradsatzes so zu applizieren, dass er zerstörungsfrei abgelöst werden kann, aber sich dennoch während des Einsatzes nicht selbständig löst. Die Erfindung ist selbstverständlich auch auf Rollenprüfstände anwendbar, sofern diese einen solchen erfindungsgemäßen Messradsatz simulieren bzw. nachbilden.

Die Öffnung zur Aufnahme des Lichtwellenleiters im Labyrinthring und im Radsatzlagerinnenring kann eine Bohrung oder eine Ausbuchtung oder eine Mulde oder eine Nut oder eine Kehle sein.
Die Datenerfassungs- und - verarbeitungseinheit ist in einem Abteil des betreffenden Wagens angeordnet und damit nicht im Schockbereich der rotierenden Räder untergebracht.
Die im Lichtwellenleiter geführten optischen Dehnungsmessstreifen sind in Reihe geschaltet.
Die optischen Dehnungsmessstreifen können auf beiden Seiten der Radscheibe und zusätzlich erforderlichenfalls auf der Welle appliziert sein.

Der optische Drehübertrager weist dabei einen Rotor und einen Stator auf. Er ist zum Beispiel in einer Öffnung des Radsatzlagerdeckels zentrisch und durch geeignete Maßnahmen gefedert eingepasst

Vorteile der Erfindung:
- es tritt keine Beeinflussung des Messsignals durch elektromagnetische Felder auf,
- die Applikation auf der Radscheibe kann einseitig erfolgen,
- der Verkabelungsaufwand ist deutlich gesenkt (Fertigungskosten, Personalaufwand),
- die Zuverlässigkeit der Messmittel ist erhöht,
- es werden weniger kostspielige Übertragungselemente benötigt,
- die negativen Einflüsse auf die Übertragungsqualität werden vermindert,
- die Instandhaltungskosten werden gesenkt,
- es sind keine Bohrungen in der Radsatzwelle mehr notwendig,
- die Radsatzwellen können somit ohne Messmittel im operativen Einsatz wiederverwendet werden,
- es muss keine elektrische Energie auf das am Radsatz applizierte Messsystem übertragen werden,
- die Messergebnisse entsprechen in ihrer Genauigkeit den Anforderungen.

### Ausführungsbeispiel

Anhand eines Ausführungsbeispieles soll nachfolgend die Erfindung näher erläutert werden.

Dabei zeigen:
- Figur 1: die Radsatzscheibe mit einem Lichtwellenleiter in der Draufsicht
- Figur 2: die Radsatzscheibe im Querschnitt

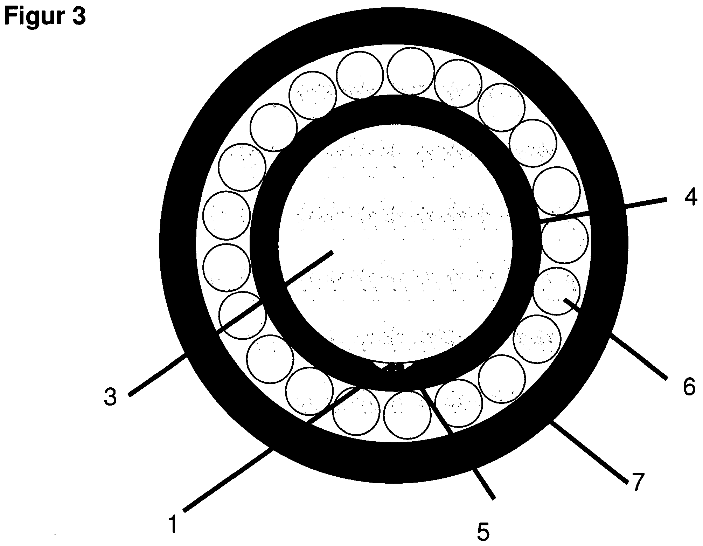

- Figur 3: die Führung des Lichtwellenleiters im Bereich des Radsatzlagers

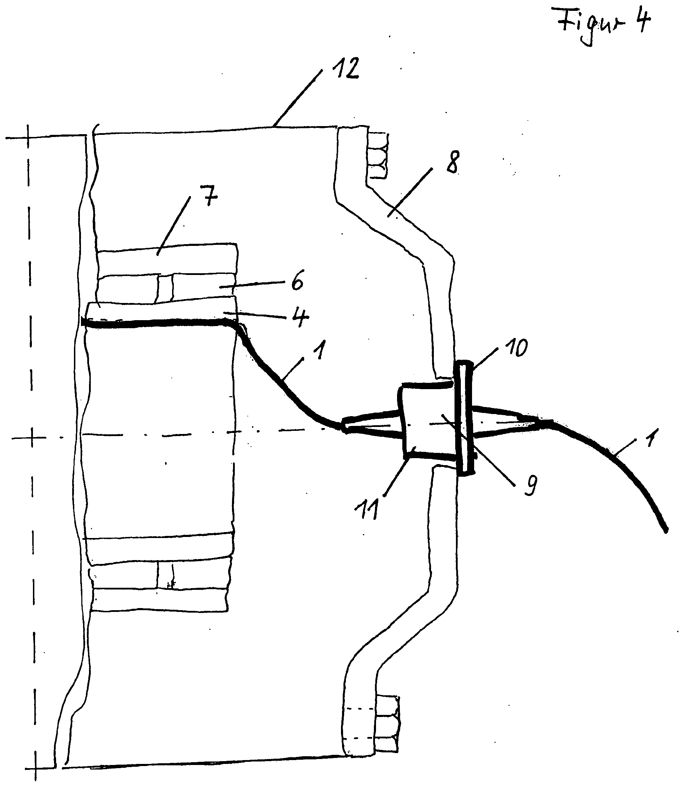

- Figur 4: die Anordnung des optischen Drehübertragers am Radsatzlagerdeckel

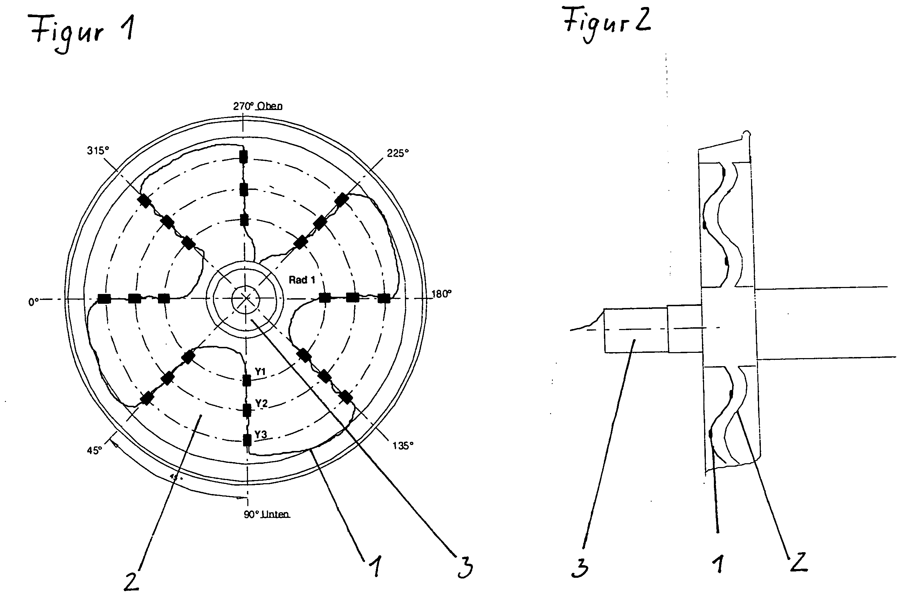

Der Lichtwellenleiter (LWL) (1) ist in Reihenschaltung durchgehend auf der Radscheibe (2) des Radsatzes aufgebracht (Figur 1). Er ist anschließend auf der Radsatzwelle (3) nach außen geführt (Figur 2). Der LWL (1) wird über eine im Radsatzlagerinnenring (4) angeordnete Mulde (5) geführt, wobei auf dem Radsatzlagerinnenring (4) die Wälzkörper (6) und der Radsatzlageraußenring (7) angeordnet sind.
Der LWL (1) wird dann zu einem im Radsatzlagerdeckel (8) angeordneten optischen Drehübertrager (9) geführt, der sich aus einem Stator (10) und einem Rotor (11) zusammensetzt. Der Radsatzlagerdeckel (8) ist auf dem Radsatzlagergehäuse (12) befestigt. Vom Drehübertrager (9) ist der LWL (1) mit einer nicht dargestellten Datenerfassungs- und - verarbeitungseinheit verbindbar. Diese extrahiert aus dem Lichtsignal die für jeden optischen Dehnungsmessstreifen spezifischen Informationen und bietet sie zur weiteren Verwendung über eine geeignete Datenschnittstelle an.

### Liste der verwendeten Bezugszeichen

1- Lichtwellenleiter (LWL)
2- Radscheibe
3- Radsatzwelle
4- Radsatzlagerinnenring
5- Mulde
6- Wälzkörper
7- Radsatzlageraußenring
8- Radsatzlagerdeckel
9- Drehübertrager
10-Stator
11-Rotor
12-Radsatzlagergehäuse

## Patentansprüche

1. Messradsatz für Schienenfahrzeuge zur Messung der zwischen Rad eines Schienenfahrzeuges und Schiene auftretenden Kräfte, umfassend einen Radsatz mit zwei Radscheiben und einer Welle, wobei auf mindestens einer Seite einer jeden Radscheibe des Radsatzes und zusätzlich erforderlichenfalls auf der Welle optische Dehnungsmessstreifen angeordnet sind, die mit einer Datenerfassungs- und -verarbeitungseinheit koppelbar sind,
***gekennzeichnet dadurch, dass***
auf dem Radsatz mindestens ein Lichtwellenleiter (1) mit den darin untergebrachten optischen Dehnungsmessstreifen angeordnet ist, wobei jeder Lichtwellenleiter (1) von den Applikationsorten auf einer Radscheibe (2) und gegebenenfalls der Welle des rotierenden Radsatzes über den Wellenbereich zwischen einem Radsitz und einem Radsatzlagersitz, durch eine Öffnung am Labyrinthring und anschließend durch eine axial auf der inneren Leibung eines Radsatzlagerinnenringes (4) verlaufende Aussparung/Mulde (5) geführt und mit einem zum Beispiel am Radsatzlagerdeckel (8) eines Radsatzlagergehäuses (12) angeordneten optischen Drehübertrager (9) verbunden ist, der mit der Datenerfassungs- und -verarbeitungseinheit koppelbar ist, die die in dem Lichtwellenleiter (1) enthaltenen Informationen kanalweise trennt und den entsprechenden Applikationsorten zuordnet, woraus die zwischen Rad und Schiene wirkenden Kräfte ermittelbar sind.

2. Vorrichtung nach Anspruch 1, ***gekennzeichnet dadurch, dass*** die Öffnung zur Aufnahme des Lichtwellenleiters im Labyrinthring und im Radsatzlagerinnenring eine Bohrung oder eine Ausbuchtung oder eine Mulde oder eine Nut oder eine Kehle ist.

3. Vorrichtung nach Anspruch 1 oder 2, ***gekennzeichnet dadurch, dass*** die im Lichtwellenleiter (1) geführten optischen Dehnungsmessstreifen in Reihe geschaltet sind und jeder Dehnungsmessstreifen in einem typischen Wellenlängenbereich arbeitet, wodurch später die Extrahierung der verschiedenen Spektralanteile in der Datenerfassungs- und - verarbeitungseinheit realisierbar ist.

4. Vorrichtung nach Anspruch 1 bis 3, ***gekennzeichnet dadurch, dass*** die optischen Dehnungsmessstreifen wahlweise auf einer oder auf beiden Seiten ein und derselben Radscheibe (2) appliziert sind und jede Radscheibe (2), für die Kräfte zu ermitteln sind, entsprechend messtechnisch appliziert ist.

5. Vorrichtung nach Anspruch 1 bis 4, ***gekennzeichnet dadurch, dass*** der optische Drehübertrager (9) einen Rotor (11) und einen Stator (10) aufweist und eine ausreichende Widerstandsfähigkeit gegenüber den Schwingungsbeanspruchungen am Montageort besitzt.

6. Vorrichtung nach Anspruch 1 bis 5, ***gekennzeichnet dadurch, dass*** im Fall einer Durchtrennung des Lichtwellenleiters (1) sich entweder alle Dehnungsmessstreifen in ein und demselben Teil des Lichtwellenleiters (1) befinden und das entsprechende Ende dieses Teils mit dem optischen Drehübertrager (9) gekoppelt ist oder wird oder dass die Trennstelle durch Einfügen eines zusätzlichen Stückes Lichtwellenleiter (1) wieder instand gesetzt wird.

7. Vorrichtung nach Anspruch 1 bis 6, ***gekennzeichnet dadurch, dass*** der Lichtwellenleiter (1) so befestigt ist, dass ein Ablösen während des Betriebes ausgeschlossen ist, ein beabsichtigtes Lösen des Lichtwellenleiters (1) von seinen Applikationsorten zu Reparaturzwecken aber durchführbar ist.

8. Vorrichtung nach Anspruch 1 bis 7, ***gekennzeichnet dadurch, dass*** beide Enden des Lichtwellenleiters (1) aus Redundanzgründen mit dem optischen Drehübertrager (9) gekoppelt sind, aber nur ein Ende tatsächlich mit dem optischen Drehübertrager (9) verbunden ist.

## Claims

1. Measuring wheel assembly for rail vehicles for measuring the forces generated between a wheel of a rail vehicle and a rail, comprising a wheel set with two wheel discs and a shaft, wherein optical strain gauges, couplable with a data acquisition and processing unit, are arranged on at least one side of each wheel disc of the wheel set and additionally, if necessary, on the shaft,
***characterised in that*** at least one optical fibre cable (1) with the optical strain gauges accommodated therein is arranged on the wheel set, wherein each optical fibre cable (1) is guided from the application positions on a wheel disc (2) and optionally the shaft of the rotating wheel set over the shaft area between a wheel seat and a wheel set bearing seat, through an opening in the labyrinth ring and then through a recess/hollow (5) running axially on the inner reveal of a wheel set bearing inner ring (4) and is connected with an optical rotary joint (9) arranged for example on the wheel set bearing cover (8) of a wheel set bearing housing (12), said optical rotary joint being couplable with the data acquisition and processing unit, which separates the information contained in the optical fibre cable (1) by channel and assigns it to the corresponding application positions, from which the forces acting between wheel and rail are determinable.

2. Device according to claim 1, ***characterised in that*** the opening to hold the optical fibre cable in the labyrinth ring and in the wheel set bearing inner ring is a drilled hole or an indentation or a hollow or a groove or a valley.

3. Device according to claim 1 or 2, ***characterised in that*** the optical strain gauges guided in the optical fibre cable (1) are connected in series and each strain gauge works in a typical wavelength range, as a result of which later the extraction of the various spectral components is realisable in the data acquisition and processing unit.

4. Device according to claims 1 to 3, ***characterised in that*** the optical strain gauges are applied optionally on one or both sides of one and the same wheel disc (2) and each wheel disc (2), for which forces are to be determined, is applied appropriately for measurement.

5. Device according to claims 1 to 4, ***characterised in that*** the optical rotary joint (9) has a rotor (11) and a stator (10) and possesses adequate resistance capability in relation to the vibration stresses at the site of installation.

6. Device according to claims 1 to 5, ***characterised in that*** in the event of a severing of the optical fibre cable (1) either all strain gauges are located in one and the same part of the optical fibre cable (1) and the corresponding end of this part is already coupled or is then coupled with the optical rotary joint (9) or that the point of severing is repaired through insertion of an additional piece of optical fibre cable (1).

7. Device according to claims 1 to 6, ***characterised in that*** the optical fibre cable (1) is fastened in such a way that any detachment during operation is ruled out, but intentional loosening of the optical fibre cable (1) from its application positions for repair purposes is possible.

8. Device according to claims 1 to 7, ***characterised in that,*** for reasons of redundancy, both ends of the optical fibre cable (1) are coupled with the optical rotary joint (9), but only one end is in fact connected with the optical rotary joint (9).

## Revendications

1. Essieu monté mesureur pour véhicules ferroviaires afin de mesurer les forces apparaissant entre une roue d'un véhicule ferroviaire et un rail, comprenant un essieu monté avec deux disques de roue et avec un arbre, dans lequel des jauges extensométriques optiques qui peuvent être connectées à une unité de détection et de traitement de données sont agencées sur au moins un côté de chaque disque de roue de l'essieu monté et en plus si nécessaire sur l'arbre,
***caractérisé en ce qu**'au* moins une fibre optique (1) avec les jauges extensométriques optiques placées à l'intérieur est agencée sur l'essieu monté,
dans lequel chaque fibre optique (1) est guidée par les points d'application sur un disque de roue (2) et le cas échéant sur l'arbre de l'essieu monté en rotation au long de la zone d'arbre entre un siège de roue et un siège de palier d'essieu monté à travers une ouverture au niveau de la bague à labyrinthe et ensuite à travers un évidement/cavité (5) s'étendant de façon axiale sur l'appui intérieur d'une bague intérieure de palier d'essieu monté (4) et est reliée à un transformateur rotatif optique (9) qui est agencé par exemple au niveau du chapeau de palier d'essieu monté (8) d'un logement de palier d'essieu monté (12) et qui peut être connecté à l'unité de détection et de traitement de données qui sépare par canaux les informations contenues dans la fibre optique (1) et les associe aux points d'application correspondants, les forces s'exerçant entre la roue et le rail pouvant alors être déterminées à partir de là.

2. Dispositif selon la revendication 1, ***caractérisé en ce que*** l'ouverture destinée à loger la fibre optique dans la bague à labyrinthe et dans la bague intérieure de palier d'essieu monté est un perçage ou une excavation ou une cavité ou une rainure ou une gorge.

3. Dispositif selon la revendication 1 ou 2, ***caractérisé en ce que*** les jauges extensométriques optiques guidées dans la fibre optique (1) sont branchées en série et chaque jauge extensométrique travaille dans une plage de longueur d'onde typique, ce qui permet de réaliser plus tard l'extraction des différentes composantes spectrales dans l'unité de détection et de traitement de données.

4. Dispositif selon la revendication 1 à 3, ***caractérisé en ce que*** les jauges extensométriques sont appliquées sélectivement sur un côté ou sur deux côtés d'un seul et même disque de roue (2) et chaque disque de roue (2) pour lequel des forces sont à déterminer est appliqué de manière correspondante du point de vue de la technique de mesure.

5. Dispositif selon la revendication 1 à 4, ***caractérisé en ce que*** le transformateur rotatif optique (9) comporte un rotor (11) et un stator (10) et présente une résistance suffisante par rapport aux contraintes d'oscillations au niveau du lieu de montage.

6. Dispositif selon la revendication 1 à 5, ***caractérisé en ce que,*** dans le cas d'une coupure de la fibre optique (1), soit toutes les jauges extensométriques se trouvent dans une seule et même partie de la fibre optique (1) et l'extrémité correspondante de cette partie est ou va être connectée au transformateur rotatif optique (9) soit le point de coupure va être remis en état par l'insertion d'un morceau supplémentaire de fibre optique (1).

7. Dispositif selon la revendication 1 à 6, ***caractérisé en ce que*** la fibre optique (1) est fixée de telle sorte qu'un détachement pendant le fonctionnement est exclu mais qu'un détachement volontaire de la fibre optique (1) de ses points d'application peut être effectué à des fins de réparation.

8. Dispositif selon la revendication 1 à 7, ***caractérisé en ce que*** les deux extrémités de la fibre optique (1) sont connectées pour des raisons de redondance au transformateur rotatif optique (9) mais une seule extrémité est effectivement reliée au transformateur rotatif optique (9).
